# EUROPEAN PATENT SPECIFICATION

(11) **EP 0 808 073 B1**
(45) Date of publication and mention of the grant of the patent: **20.04.2005**
(21) Application number: 97107253.3
(22) Date of filing: 02.05.1997
(51) Int. Cl.: H04Q 7/38, H04M 15/00

(54) **Method and apparatus for mobile radio system selection**
Verfahren und Einrichtung zur Wahl eines Mobilfunksystems
Procédé et appareil pour sélectionner un réseau radio mobile

(30) Priority: 17.05.1996 GB 9610328
(43) Date of publication of application: 19.11.1997
(73) Proprietor: MOTOROLA LTD, Basingstoke, Hampshire RG22 4PD (GB)
(72) Inventor: Whinnett, Nicholas, 75004 Paris (FR); Robinson, William, 78860 Saint Nom la Breteche (FR); Gibbs, Jonathan, Southampton Hants SO30 2UL (GB); van den Heuvel, Anthony, 78120 Clairefontaine (FR)
(74) Representative: Jepsen, Rene Pihl

(56) References cited:
- WO-A-94/28683
- GB-A- 2 294 844
- US-A- 5 473 630

## Description

### Field of the Invention

The present invention relates to communication systems, and more particularly, to a method and apparatus for selecting a communication system.

### Background of the Invention

Where a number of wireless networks which offer similar service capabilities are available for public access in the same geographic area, it is desirable to promote efficient spectrum loading, minimal call costs to the user, and competition between network operators. This is true in the user's "home" area as well as when the user roams to other areas. Efficient spectrum utilisation is promoted because lightly loaded systems can attract customers towards it. Also, overloading of networks, particularly packet data networks, can be avoided. By selecting the operator providing the desired service and quality of service at the lowest cost, the call costs tend to be minimised for the user, at least for outgoing calls. Finally, having dynamic costing structures promotes competition.
GB-A-2 294 844 describes a system where a common communication system provides information regarding the availability of other communication systems within the common communications system coverage area to a generic programmable subscriber unit. The subscriber unit subsequently selects one of the communication systems for an outgoing call.
WO 94 28683 A discloses a communication system in which a user equipment is provided with a selecting device which communicates with a pricing device in service provider equipment. When a service is required, the selecting device in the user equipment pols the pricing devices in a plurality of service providers and selects the service provider having the lowest price.
For future communications systems it is anticipated that two classes of service may exist. The first is a limited set of standardised core services such as telephony. The second is a set of operator-specific services which may be created by an operator and which are quite specific to the operator's network. A user in a home network may normally subscribe to a preferred operator or set of operators which provide mobility management and which together provide the user's desired service mix. An emerging requirement of third generation systems is that users when roaming should be able to access the same service set, even if the visited systems do not normally provide all the services.
Accordingly, there is also a need for a method and apparatus for selecting a communication system to minimize tariff rates.

The present invention consists of a method of transferring an incoming call made to a mobile unit associated with a home communication system to said mobile unit located in a visited communication system, said method comprising the steps of;
at the home communication system, receiving an incoming call to said mobile unit,
polling a plurality of communication systems accessible to said mobile unit and providing a service description to determine offered tariffs;
selecting one of said plurality of communication systems according to said offered tariff and instructing said mobile unit to receive said incoming call on said one selected communication system.

### Brief Description of the Drawings

FIG. 1 is a block diagram of a communication network according to the present invention;
FIG. 2 is a block diagram of a communication system of FIG. 1;
FIG. 3 is a block diagram of a transmitter adapted to operate according to the present invention with one or more systems of FIG. 1;
FIG. 4 is a flow chart showing a method of selecting a system to make an outgoing call;
FIG. 5 is a flow chart showing a method for making an outgoing call for non-standardised service types; and
FIG. 6 is a flow chart showing the method for receiving an incoming call according to the present invention.

### Detailed Description of the Invention

The present invention is directed to a method for selecting a communication system when a user of a mobile unit is away from the home system to which it is registered. According to the preferred embodiment of the present invention a method of minimising incoming call costs to the user is described wherein the home system polls the communication systems within range of the mobile unit to select the best system to provide service.

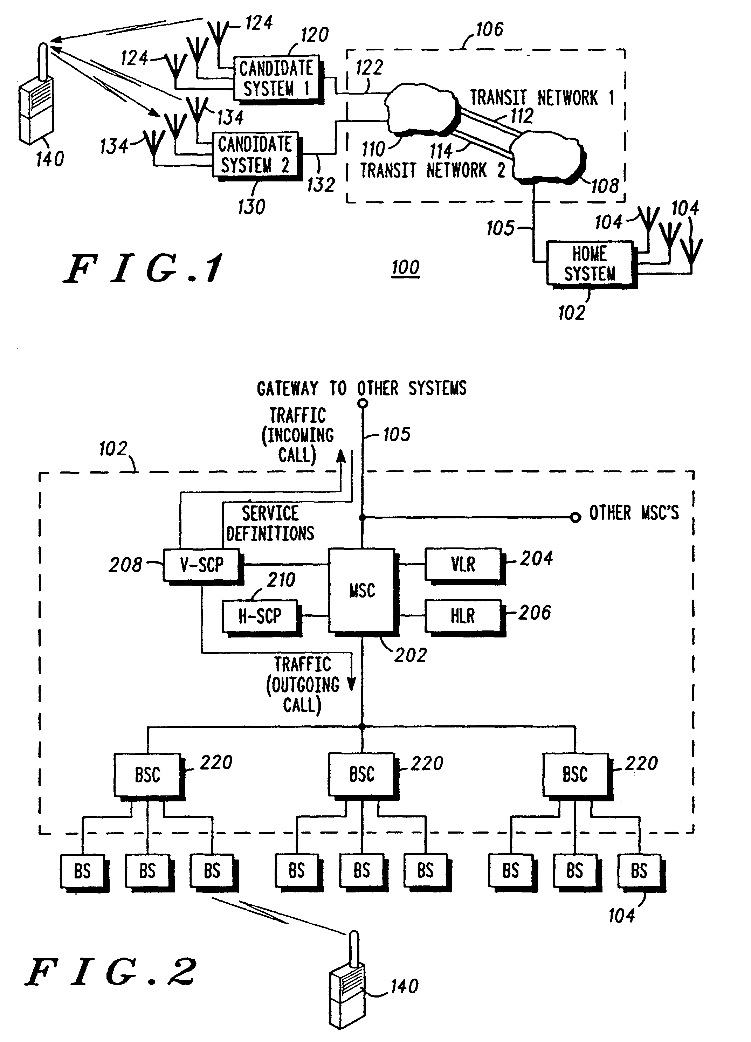

FIG. 1 is a system level diagram for a wireless communication system. A home system 102 having a plurality of base stations 104 is coupled to a communication network 106. The communication network is a wide area communication network including a wireline network. Generally, communication network 106 includes hubs 108 and 110 having various transmission paths, including transmit network path 112 and transmit network path 114. A candidate system 120 having a plurality of base stations 124 is coupled to the communication network. A second candidate system 130 also having a plurality of base stations 134 is coupled to the communication network. A mobile terminal 140 is adapted to communicate with the candidate systems.

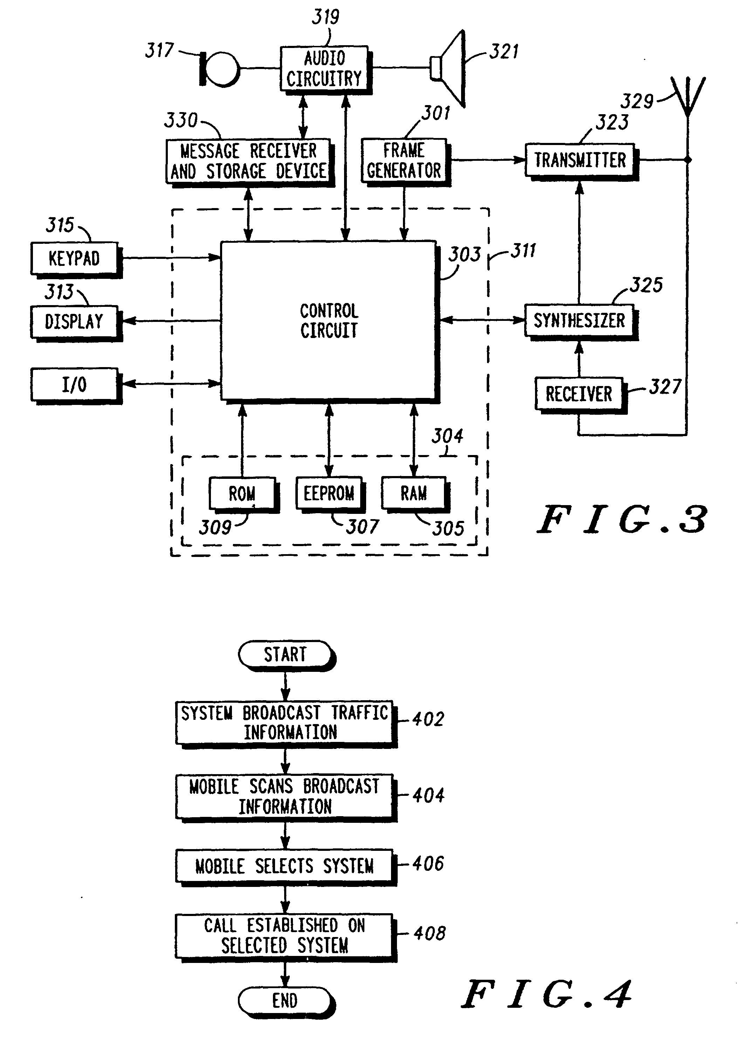

Turning now to FIG. 2, a block diagram of a communication system is shown. The home system preferably includes a mobile switching centre (MSC) 202. The MSC is coupled to a Visitor Location Register (VLR) 204 as well as a Home Location Register (HLR) 206. The MSC is also coupled to a Visitor Service Creation Platform (V-SCP208) as well as a Home Service Creation Platform (H-SCP) 210. The V-SCP receives a service definition from a second system from which the mobile terminals are visiting, and transmits tariff information to the second system for an incoming call. The V-SCP also transmits tariff information for an outgoing call to a plurality of base station controllers (BSC) 220. The V-SCP also controls the MSC using the service definition. Each base station controller is coupled to a plurality of base stations 104 which is adapted to communicate with a mobile terminal 140. Although the diagram shows by way of example the home system, the diagram could apply equally to a candidate system.
Turning now to FIG. 3, a block diagram shows a mobile terminal such as a cellular radiotelephone or other wireless communication device. In the preferred embodiment, an ASIC (Application Specific Integrated Circuit) 301, such as a CMOS ASIC available from Motorola, Inc., and a microprocessor 303, such as a 68HC11 microprocessor also available from Motorola, Inc., combine to generate a necessary communication protocol for operating in the communication system. The microprocessor 303 uses RAM 305, EEPROM 307, and ROM 309, consolidated in one package 311 in the preferred embodiment, to execute the steps necessary to generate the protocol and to perform other functions for the terminal, such as writing to a display 313, accepting information from a keypad 315, and controlling a frequency synthesizer 325. The ASIC 301 processes audio transformed by the audio circuitry 319 from a microphone 317 and to a speaker 321. Transmitter 323 transmits through an antenna 329 using carrier frequencies produced by the frequency synthesizer 325. Information received by the communication unit's antenna 229 enters the receiver 327 which demodulates the symbols comprising the message frame using the carrier frequencies from the frequency synthesizer 325. The wireless communication device may optionally include a message receiver and storage device including digital signal processing means. The message receiver and storage device could be, for example, a digital answering machine or a paging receiver. While the circuitry of FIG. 2 shows an exemplary terminal, other circuitry could be employed.

Tuming to FIG. 4 the preferred steps for making an outgoing call of a standardised type service is shown. The candidate visited system broadcasts a list of standardized type services including any associated information such as quality, and tariff information for these services at a step 402. The tariffs information may be a function of destination (e.g. long distance tariff). This tariff information is updated from time to time by the operator based, for example, upon system loading, and may include an indication of the duration for which the current tariff is valid. At call setup time, the mobile scans all available systems at a step 404 and chooses one which offers the required service at the lowest rate at a step 406. Alternatively, the mobile could select a system based upon criteria other than the cost of service. The mobile registers with the selected system for the required service and establishes the call at a step 408. Alternatively, the mobile may also perform a background task of scanning the system broadcasts between calls and building up a tariff map of preferred systems for each service to reduce call setup delays.

Alternatively, rather than systems broadcasting tariff information at a step 402, the mobile polls local candidate systems at call set up time, indicating the required service, and any additional information such as quality and destination. The polled candidate systems also respond with tariff information which is received by the mobile at a step 404. The mobile then chooses the one which offers the required service at the lowest rate, and registers with this system for the required service and places the call. The polling takes the form of individual accesses to the various candidate systems. Alternatively, the mobile "broadcasts" its requirements on a common access channel, and local systems respond with tariff information using a multiple access scheme. This multiple access scheme may simply involve holding the tariff information on a downlink channel long enough that the mobile can read the offers of several systems.

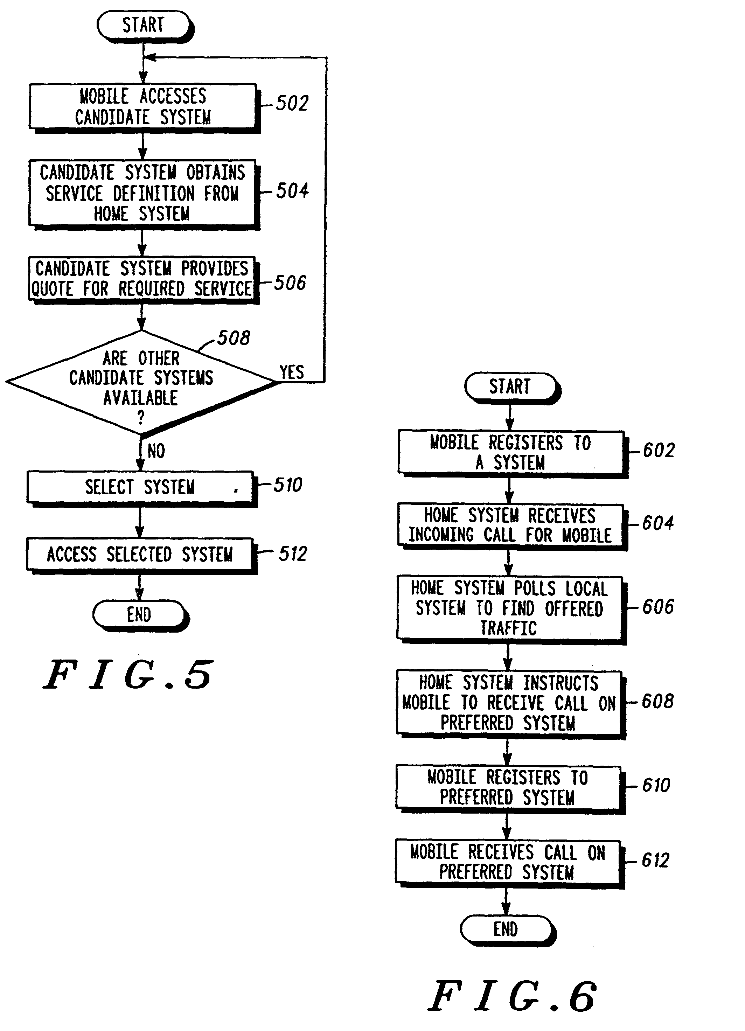

Turning now to FIG. 5, the steps for initiating an outgoing call of a non-standardised type service is shown. In this case, broadcasts from the candidate systems are not possible because the service set is unlimited. In addition, the entire service definition may not be known to the mobile and therefore the potential systems may have to interrogate the home service provider before they can quote a delivery charge.

Therefore, the mobile accesses a candidate system and informs it of the location of the home network and desired service identifier at a step 502. The candidate system obtains the service information on this service from the home network H-SCP at a step 504, and then the V-SCP of the candidate system provides a quotation for a required service at a step 506. The mobile then determines whether other candidate systems are available. If other candidate systems are available, the mobile accesses the candidate system at a step 502. If no other candidate systems are available, the mobile selects a system at a step 510. The mobile then accesses the selected candidate system at a step 512. Alternatively, the selection may be made by the home system.

Alternatively, the mobile accesses a candidate visited system and provides it with a service definition for the desired service. The candidate system V-SCP then offers the mobile a rate. This is repeated for other candidate visited systems. The mobile chooses the one which offers the required service at the lowest rate. In some cases, a candidate system may not be able to provide the desired service (for example, it does not have interconnection to a particular information database). In this case, a "no bid" indication may be given. For outgoing calls, the choice of transit network (i.e. long haul network between visited and home system) will be made by the visited system, and the particular destination or region may impact the offered rate to the user. Therefore, destination information for the call will be necessary.

Turning now to FIG. 6, the preferred steps for receiving an incoming call according to the present invention are shown. A method of minimising incoming call costs to the user is described. This is useful where charges are levied on incoming calls when roaming, which is the case currently when roaming with GSM. The mobile registers to a system at a step 602. The H-SCP of the home network (or equivalent) receives an indication of the incoming call for the mobile at a step 604, and polls systems known to exist in the locality of the mobile, including the current visited candidate system at a step 606. This may require the HLR (or equivalent) to provide to the candidate visited system(s) information on the service definition, if the service is not of the standardised service type. Alternatively, the HLR may have stored previously arranged tariffs for different candidate visited systems and for different services.

If, within some time constraint, the HLR finds a system prepared to offer the service at a lower rate than the currently registered visited system, a short message is sent to the mobile via its currently registered system which informs the mobile to try and find the new at a step 608. The mobile may be informed of the control channel set of the candidate system(s). If the mobile is able to find the candidate system within a time constraint, then registration occurs at a step 610 and the call is delivered via the new visited system at a step 612. If no better rate is available on another visited system, the call is delivered on the original visited system. The choice made by the home system will preferably include considerations of the costs of possible transit networks between home and visited systems.

## Claims

1. A method of transferring an incoming call made to a mobile unit (140) associated with a home communication system (102) to said mobile unit (140) located in a visited communication system (120,130), said method comprising the steps of:
at the home communication system(102), receiving an incoming call to said mobile unit(140),
at the home communication system (102), polling (606) a plurality of communication systems (120,130) accessible to said mobile unit (140) and providing a service description to determine offered tariffs;
selecting (510) one of said plurality of communication systems (120,130) according to said offered tariffs; and
instructing (608) said mobile unit (140) to register into the selected communication system (120,130) to receive said incoming call.

## Patentansprüche

1. Verfahren zum Übertragen eines ankommenden Rufs, der an eine einem Home-Kommunikationssystem (102) zugeordnete Mobileinheit (140) gerichtet ist, an die Mobileinheit (140), die sich in einem besuchten Kommunikationssystem (120, 130) befindet, wobei das Verfahren die Schritte umfasst:
Empfangen eines an die Mobileinheit (140) gerichteten ankommenden Rufs an dem Home-Kommunikationssystem (102),
Abfragen (606), an dem Home-Kommunikationssystem (102), einer Mehrzahl von Kommunikationssystemen (120, 130), auf welche die Mobileinheit (140) zugreifen kann, und Bereitstellen einer Dienstbeschreibung, um angebotene Tarife zu bestimmen;
Auswählen (510) eines der Mehrzahl von Kommunikationssystemen (120, 130) gemäß den angebotenen Tarifen; und
Instruieren (608) der Mobileinheit (140), sich in dem ausgewählten Kommunikationssystem (120, 130) zu registrieren, um den ankommenden Ruf zu empfangen.

## Revendications

1. Procédé pour transférer un appel entrant passé vers une unité mobile (140) associée à un système de communication domestique (102) à ladite unité mobile (140) située dans un système de communication visité (120, 130), ledit procédé comprenant les étapes consistant à :
au niveau du système de communication domestique (102), recevoir un appel entrant vers ladite unité mobile (140),
au niveau du système de communication domestique (102), interroger (606) une pluralité de systèmes de communication (120, 130) accessibles à ladite unité mobile (140), et fournir une description de service afin de déterminer les tarifs offerts ;
sélectionner (510) un système parmi ladite pluralité de systèmes de communication (120, 130) sur la base desdits tarifs offerts ; et
demander (608) à ladite unité mobile (140) de s'enregistrer dans le système de communication sélectionné (120, 130) afin de recevoir ledit appel entrant.
